# EUROPEAN PATENT SPECIFICATION

(11) **EP 3 291 630 B1**
(45) Date of publication and mention of the grant of the patent: **23.12.2020**
(21) Application number: 15892183.3
(22) Date of filing: 19.05.2015
(51) Int. Cl.: H04W 8/00, H04W 68/00, H04W 48/16, H04W 84/18

(54) **METHOD FOR PAGING BETWEEN NEIGHBOR AWARENESS NETWORKS, AND NEIGHBOR AWARENESS NETWORK DEVICE**
VERFAHREN ZUM FUNKRUFEN ZWISCHEN NACHBARBEWUSSTSEINSNETZWERKEN UND NACHBARBEWUSSTSEINSNETZWERKVORRICHTUNG
PROCÉDÉ DE RADIOMESSAGERIE ENTRE DES RÉSEAUX SENSIBLES AU VOISINAGE, ET DISPOSITIF DE RÉSEAU SENSIBLE AU VOISINAGE

(43) Date of publication of application: 07.03.2018
(73) Proprietor: Huawei Technologies Co. Ltd., Shenzhen, Guangdong 518129 (CN)
(72) Inventor: LI, Xiaoxian, Shenzhen Guangdong 518129 (CN); FANG, Ping, Shenzhen Guangdong 518129 (CN); CHEN, Ji, Shenzhen Guangdong 518129 (CN)
(74) Representative: Gill Jennings & Every LLP
(86) International application number: PCT/CN2015/079296
(87) International publication number: WO 2016/183804

(56) References cited:
- WO-A1-2015/021780
- CN-A- 104 488 349
- CN-A- 104 620 613
- US-A1- 2013 265 906
- US-A1- 2014 293 851
- US-A1- 2015 109 981
- "Neighbor Awareness Networking Technical Specification", , 1 May 2015 (2015-05-01), pages 1-98, XP055258740, Retrieved from the Internet: URL:https://www.wi-fi.org/discover-wi-fi/s pecifications [retrieved on 2016-03-16]

## Description

### TECHNICAL FIELD

The present invention relates to the field of communications technologies, and in particular, to a method for paging between NAN devices, and a NAN device.

### BACKGROUND

With rapid development of communications technologies, a neighbor awareness networking (NAN for short) mechanism that is based on a Wi-Fi technology and is put forward by the Wi-Fi alliance (WFA for short) gradually becomes a hot topic to which people pay attention. In the NAN mechanism, a NAN network that includes multiple devices (hereinafter referred to as NAN devices) having a NAN function is referred to as a cluster, and each NAN device in the cluster may perform service discovery in a discovery window (DW for short) of the cluster, so as to discover another NAN device that can perform data transmission with the NAN device. After the service discovery, a paging operation needs to be performed before data transmission is performed between at least two NAN devices that need to perform data transmission with each other.

Currently, paging between devices needs to depend on assistance of a central node. In a network that includes multiple devices, a device in the multiple devices is used as the central node, other devices each need to establish a connection to the central node, and the central node allocates an association identifier (AID for short) to each of the other devices, so that the association identifier is used by the central node to page the other devices. When the central node needs to send data to a device, the central node adds an AID of the device to a broadcast frame for paging. When the device receives the AID of the device, the device responds to the central node, so that the central node determines, according to the response of the device, whether to send data to the device, so as to complete a paging operation performed by the central node on the device.

If an existing paging mechanism is used for at least two NAN devices in a cluster that need to perform data transmission, that is, a NAN device is specified as the central node to implement a paging operation performed by the NAN device on another NAN device, because paging between NAN devices depends on the assistance of the central node, when the NAN device used as the central node leaves the cluster, and paging further needs to be performed between other NAN devices, a new central node further needs to be specified in the other NAN devices, a connection to the new central node further needs to be re-established, and the new central node further needs to reallocate an AID, so that the new central node can perform a paging operation on a NAN device different from the new central node in the other NAN devices. Consequently, efficiency of paging between NAN devices is affected.

US 2015/0109981 relates to systems and methods for establishing synchronization across multiple networks and participating STAs via operations on a known common channel. US 2013/0265906 relates to devices and methods for beacon communication in ad-hoc networks.

### SUMMARY

The present invention provides methods for paging between NAN devices so that paging between NAN devices does not need to depend on assistance of a central node, and efficiency of paging between NAN devices is improved.

In particular, various aspects of the present invention are defined in the independent claims. Further technical features corresponding to each of these aspects are set out in the respective dependent claims.

The present invention provides the method for paging between NAN devices, and the NAN device. The method may include the following steps: The first NAN device sends the first paging message in the first window, receives the paging response message sent by the second NAN device that meets the first service information, and determines, according to the paging response message, whether the first NAN device is to perform data transmission with the second NAN device. The first paging message carries the first service information of the first NAN device. The paging response message is used to indicate that data transmission needs to be performed between the first NAN device and the second NAN device. The first service information is used to describe the service that needs to be performed by the first NAN device. By using the method, the first NAN device may send, to a NAN device in the group in the specified first window, a paging message that carries service information, so that after determining that the second NAN device meets the service information, the second NAN device receiving the paging message feeds the paging response message back to the first NAN device. That is, paging can be performed between NAN devices by using service information. Therefore, paging between NAN devices neither needs to depend on assistance of a central node, nor needs the central node to allocate an AID to each NAN device, so that efficiency of paging between NAN devices is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show only some but not all of the embodiments of the present invention.
FIG. 1 is a schematic diagram of a DW of a cluster in the prior art;
FIG. 2 is a flowchart 1 of a method for paging between NAN devices according to an embodiment of the present invention;
FIG. 3 is a flowchart 2 of a method for paging between NAN devices according to an embodiment of the present invention;
FIG. 4 is a schematic diagram of a time-frequency resource of a group according to an embodiment of the present invention;
FIG. 5 is a flowchart 3 of a method for paging between NAN devices according to an embodiment of the present invention;
FIG. 6 is a schematic diagram 1 of a time-frequency resource of a group according to an embodiment of the present invention;
FIG. 7 is a flowchart 4 of a method for paging between NAN devices according to an embodiment of the present invention;
FIG. 8 is a schematic diagram 2 of a time-frequency resource of a group according to an embodiment of the present invention;
FIG. 9 is a flowchart 5 of a method for paging between NAN devices according to an embodiment of the present invention;
FIG. 10 is a flowchart 6 of a method for paging between NAN devices according to an embodiment of the present invention;
FIG. 11 is a schematic structural diagram 1 of a NAN device according to an embodiment of the present invention;
FIG. 12 is a schematic structural diagram 2 of a NAN device according to an embodiment of the present invention;
FIG. 13 is a schematic structural diagram 3 of a NAN device according to an embodiment of the present invention;
FIG. 14 is a schematic structural diagram of hardware of a NAN device according to an embodiment of the present invention; and
FIG. 15 is a block diagram of a communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are only some but not all of the embodiments of the present invention.

Before a method for paging between NAN devices, and a device that are provided in the embodiments of the present invention are described, a NAN mechanism is first briefly described.

According to a standard formulated by the Wi-Fi alliance, in the NAN mechanism, a channel 6 may be used as a discovery channel. On the channel 6, duration of a DW of each cluster is fixed, and a time interval between any two adjacent DWs of the cluster is also fixed.

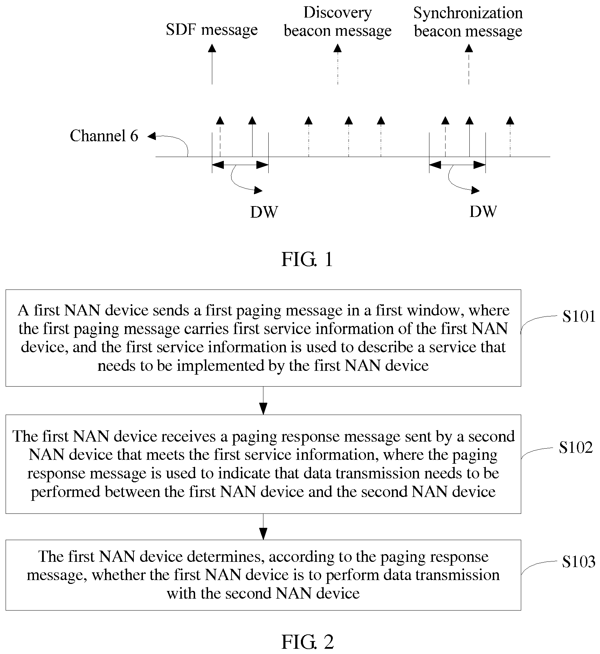

For example, as shown in FIG. 1, FIG. 1 is a schematic diagram of a DW of a cluster. According to the standard formulated by the Wi-Fi alliance, in the DW, a NAN device in the cluster may send a synchronization beacon message in the DW, so that NAN devices in the cluster keep synchronized; or may send a service discovery frame (SDF for short) message, to perform service discovery. In a time period different from the DW, the NAN device in the cluster may send a discovery beacon message, to announce existence of the cluster.

Each NAN device in the cluster may perform service discovery in the DW, to discover another NAN device that can perform data transmission with the NAN device. After the service discovery, at least two NAN devices that need to perform data transmission with each other may agree on a time-frequency resource and a network connection manner in the DW; and when the DW ends, establish, on the agreed time-frequency resource in the agreed network connection manner, a corresponding network that has a central node.

The network established according to the agreement may be a basic WiFi technology network that includes an infrastructure basic service set (Infrastructure BSS for short) network; or may be a peer-to-peer (P2P) network.

When the at least two NAN devices establish the Infrastructure BSS network according to the agreement, if a NAN device in the at least two NAN devices is an AP (access point), the AP may be used as the central node, and other NAN devices are all connected to the AP; or if none of the at least two NAN devices is an AP, a user may specify a NAN device as the central node, and other NAN devices are all connected to the NAN device.

When the at least two NAN devices establish the P2P network according to the agreement, the at least two NAN devices may negotiate for a group owner (GO for short), determine that a NAN device serves as the GO, and use the GO as the central node. Other NAN devices are all connected to the GO.

Further, on the agreed time-frequency resource, the central node allocates an AID to each NAN device different from the central node in the at least two NAN devices, so that the AID is used by the central node to page another NAN device. Specifically, when the central node needs to send data to a NAN device, the central node adds an AID of the NAN device to a broadcast frame for paging. After receiving the AID of the NAN device, the NAN device responds to the central node, so that the central node determines, according to the response of the NAN device, whether to send data to the NAN device, so as to complete paging performed by the central node on the NAN device.

It should be noted that an existing paging mechanism depends on assistance of the central node, that is, the central node initiates paging, and needs to perform paging according to an AID allocated by the central node to each device connected to the central node. Therefore, when a NAN device used as the central node leaves a network established by the NAN device and other NAN devices, if paging further needs to be performed between the other NAN devices, a new central node needs to be specified in the other NAN devices, a connection to the new central node needs to be re-established, and the new central node needs to reallocate an AID. Consequently, efficiency of paging between NAN devices is affected.

According to the method for paging between NAN devices, and the NAN device that are provided in the embodiments of the present invention, paging between NAN devices does not need to depend on assistance of a central node, and efficiency of paging between NAN devices is improved.

The invention is carried out according to the appended independent claims. Optional features of the invention are carried out according to the dependent claims. However, technical descriptions of apparatus, products and/or methods in the description and/or drawings which are not covered by the claims are presented not as embodiments of the invention but as background art or examples useful for understanding the invention.

### Embodiment 1

An embodiment of the present invention provides a method for paging between NAN devices. As shown in FIG. 2, the method may include the following steps.

S101. A first NAN device sends a first paging message in a first window, where the first paging message carries first service information of the first NAN device, and the first service information is used to describe a service that needs to be performed by the first NAN device.

The first window is a first window that is of a group and in which the first NAN device performs paging. In the first window, all NAN devices in the group keep in an active state, and any NAN device that needs to perform paging in the group may perform paging in the first window. The group may be a group to which the first NAN device belongs, or may be a group that the first NAN device is to join.

Specifically, the first NAN device may broadcast the first paging message in the first window, or may send the first paging message in the first window by means of multicast. If the first NAN device has determined a message address of a second NAN device in the group before sending the first paging message, the first NAN device may directly send the first paging message to the second NAN device. No limitation is specifically imposed in the present invention.

Further, when the first NAN device sends the first paging message in the first window by means of broadcast or multicast, because all the NAN devices in the group keep in the active state in the first window, any NAN device different from the first NAN device in the group may receive the first paging message sent by the first NAN device.

In this embodiment of the present invention, the first paging message carries the first service information, and the first service information is used to describe the service that needs to be performed by the first NAN device. For example, the first service information may include a name of the service, an identifier (ID for short) of the service, and other description information related to the service.

For example, when the first NAN device receives a user instruction "searching for a nearby friend", the first service information may be a WeChat identifier of the first NAN device, or the like. When the first NAN device receives a user instruction "searching for piano music", the first service information may be "searching for piano music for sharing".

In this embodiment of the present invention, the first paging message may be used to notify the second NAN device receiving the first paging message that the first NAN device has a service requirement. The first paging message is further used to instruct the second NAN device receiving the first paging message to determine whether the second NAN device meets the first service information. If the second NAN device can meet the first service information, the second NAN device may perform data transmission with the first NAN device.

S102. The first NAN device receives a paging response message sent by a second NAN device that meets the first service information, where the paging response message is used to indicate that data transmission needs to be performed between the first NAN device and the second NAN device.

The paging response message may be a query message used to query whether the first NAN device needs to send data to the second NAN device, that is, data transmission to be performed between the first NAN device and the second NAN device may be understood as that the first NAN device is to send data to the second NAN device.

Alternatively, the paging response message may be a transmission indication message used to indicate that the second NAN device needs to send data to the first NAN device, that is, data transmission to be performed between the first NAN device and the second NAN device may be understood as that the second NAN device is to send data to the first NAN device.

S103. The first NAN device determines, according to the paging response message, whether the first NAN device is to perform data transmission with the second NAN device.

Specifically, when the paging response message is a query message, the first NAN device determines, according to the query message, whether to send data to the second NAN device.

For example, it is assumed that the first service information of the first NAN device is "searching for a printer", and the second NAN device is a printer. Therefore, after receiving the first paging message, the second NAN device determines, according to the first paging message, that the second NAN device meets the first service information, so that the second NAN device is ready to receive to-be-printed data from the first NAN device, and sends a query message to the first NAN device.

After receiving the query message sent by the second NAN device, the first NAN device determines, according to the query message, whether the first NAN device buffers data to be sent to the second NAN device. If the first NAN device buffers data to be sent to the second NAN device, the first NAN device determines to send the to-be-printed data to the second NAN device. If the first NAN device buffers no data to be sent to the second NAN device, the first NAN device determines not to send the to-be-printed data to the second NAN device.

When the paging response message is a transmission indication message, the first NAN device determines, according to the transmission indication message, whether to receive data to be sent by the second NAN device.

For example, it is assumed that the first service information of the first NAN device is "searching for piano music for sharing", and the second NAN device can provide piano music for sharing. Therefore, after receiving the first paging message, the second NAN device determines, according to the first paging message, that the second NAN device meets the first service information, so that the second NAN device is ready to send, to the first NAN device, data corresponding to the piano music, and sends a transmission indication message to the first NAN device, to request the first NAN device to receive the data to be sent by the second NAN device.

After the first NAN device receives the transmission indication message sent by the second NAN device, the first NAN device determines, according to the transmission indication message, whether to receive the data that is to be sent by the second NAN device and is corresponding to the piano music.

The method for paging between NAN devices provided in this embodiment of the present invention may include the following steps: The first NAN device sends the first paging message in the first window, receives the paging response message sent by the second NAN device that meets the first service information, and determines, according to the paging response message, whether the first NAN device is to perform data transmission with the second NAN device. The first paging message carries the first service information of the first NAN device. The paging response message is used to indicate that data transmission needs to be performed between the first NAN device and the second NAN device. The first service information is used to describe the service that needs to be performed by the first NAN device. By using the method, the first NAN device may send, to a NAN device in the group in the specified first window, a paging message that carries service information, so that after determining that the second NAN device meets the service information, the second NAN device receiving the paging message feeds the paging response message back to the first NAN device. That is, paging can be performed between NAN devices by using service information. Therefore, paging between NAN devices neither needs to depend on assistance of a central node, nor needs the central node to allocate an AID to each NAN device, so that efficiency of paging between NAN devices is improved.

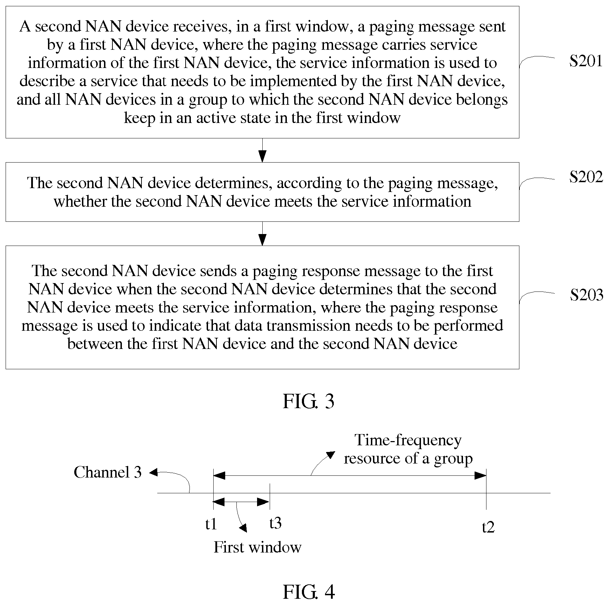

An embodiment of the present invention provides a method for paging between NAN devices. As shown in FIG. 3, the method may include the following steps.

S201. A second NAN device receives, in a first window, a paging message sent by a first NAN device, where the paging message carries service information of the first NAN device, the service information is used to describe a service that needs to be performed by the first NAN device, and all NAN devices in a group to which the second NAN device belongs keep in an active state in the first window.

It should be noted that the first NAN device and the second NAN device are in a same cluster. The group to which the second NAN device belongs may be created by the second NAN device, or may be created by another NAN device in the cluster. If the group is created by another NAN device, after the second NAN device performs service discovery in a DW, when the second NAN device determines that the second NAN device may establish a data connection to a NAN device in the group, the second NAN device requests to join the group.
The first window is a window specified on a time-frequency resource of the group.

Further, the time-frequency resource of the group may include a time resource and a frequency resource. The time resource may be a fixed time period, or may be a time period from a specified start time point to an end time point determined according to a status of data transmission between NAN devices in the group. The frequency resource may be a specified channel or a specified carrier frequency.

It should be noted that in this embodiment of the present invention, the time-frequency resource of the group may be specified by a NAN device that creates the group, or may be determined according to a specified algorithm when the group is created, or may be determined by means of negotiation between a NAN device that creates the group and a NAN device that joins the group. No limitation is specifically imposed in the present invention.

Further, in this embodiment of the present invention, the first window is set on the time-frequency resource of the group. The first window is a time period that is on the time-frequency resource of the group and in which it is specified that all the NAN devices in the group keep in the active state. The first window may be used for paging between NAN devices in the group, to determine whether data transmission is to be performed. When any two NAN devices in the group determine, by means of paging, that data transmission needs to be performed, the two NAN devices may transmit data in a time period different from the first window on the time-frequency resource of the group.

The first window may be specified by a NAN device in the group, or may be determined by means of negotiation between NAN devices in the group, or may be determined according to a preset rule. The first window may be of fixed duration, or may be of duration that is dynamically changed.

For example, as shown in FIG. 4, FIG. 4 shows a time-frequency resource of the group. That is, the group operates on a channel 3, and a time window ranges from t1 to t2. A time period from t1 to t3 is the first window. Paging may be performed between NAN devices in the group in the first window. A time period from t2 to t3 is used by a NAN device in the group to transmit data.

It may be understood that the first window is an attribute of the group. When finding the group in the DW, the first NAN device may obtain information about the first window from the DW, and then the first NAN device may determine the first window of the group according to an indication of the information about the first window.

The paging message of the first NAN device is the same as the first paging message in the embodiment shown in FIG. 2. Details are not described herein again.

The service information of the first NAN device is the same as the first service information in the embodiment shown in FIG. 2. Details are not described herein again.

S202. The second NAN device determines, according to the paging message, whether the second NAN device meets the service information.

The paging message is used to instruct the second NAN device receiving the paging message to determine whether the second NAN device meets the service information carried in the paging message.

S203. The second NAN device sends a paging response message to the first NAN device when the second NAN device determines that the second NAN device meets the service information, where the paging response message is used to indicate that data transmission needs to be performed between the first NAN device and the second NAN device.

Specifically, when the service indicated by the service information is a unicast service, for example, the service information is "searching for a printer", that is, the first NAN device needs only one printer, after determining that the second NAN device meets the service information, the second NAN device may compete with another NAN device that meets the service information in the group, to send the paging response message to the first NAN device. For example, when both the second NAN device and a third NAN device meet the service information, if the second NAN device first sends the paging response message to the first NAN, after the third NAN device detects that the second NAN device has sent the paging response message to the first NAN device, the third NAN device may not need to send a paging response message to the first NAN.

When the service indicated by the service information is a multicast service, for example, the service information is "searching for a friend", if both a third NAN device and the second NAN device in the group meet the service information, both the third NAN device and the second NAN device may directly send a paging response message to the first NAN device.

The method for paging between NAN devices provided in this embodiment of the present invention may include the following steps: The second NAN device receives, in the first window, the paging message sent by the first NAN device, where the paging message carries the service information of the first NAN device, and determines, according to the paging message, whether the second NAN device meets the service information; and the second NAN device sends the paging response message to the first NAN device when the second NAN device determines that the second NAN device meets the service information, so that after receiving the paging response message, the first NAN device determines, according to the paging response message, whether the first NAN device is to perform data transmission with the second NAN device. The service information is used to describe the service that needs to be performed by the first NAN device. All the NAN devices in the group to which the second NAN device belongs keep in the active state in the first window. By using the method, the second NAN device may determine whether the second NAN device meets the service information of the first NAN device, to determine whether to respond to paging performed by the first NAN device; and feed the paging response message back to the first NAN device when the second NAN device meets the service information. That is, paging can be performed between NAN devices by using service information. Therefore, paging between NAN devices neither needs to depend on assistance of a central node, nor needs the central node to allocate an AID to each NAN device, so that efficiency of paging between NAN devices is improved.

### Example 2

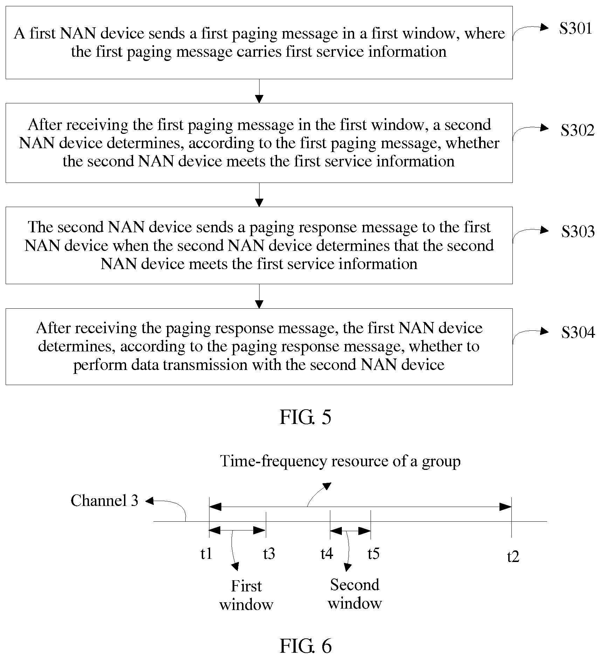

An example provides a method for paging between NAN devices. As shown in FIG. 5, the method may include the following steps.

S301. A first NAN device sends a first paging message in a first window, where the first paging message carries first service information.

For detailed description of the first service information, refer to the related description of the first service information in the embodiment shown in FIG. 2. For detailed description of the first window, refer to the related description of the first window in the embodiment shown in FIG. 3. Details are not described herein again.

It should be noted that the first paging message further carries information about a second window, and the information about the second window is used to indicate the second window in which the first NAN device performs data transmission on a time-frequency resource of a group to which a second NAN device belongs.

For example, as shown in FIG. 6, FIG. 6 shows a time-frequency resource of the group. That is, the group operates on a channel 3, and a time window ranges from t1 to t2. A time period from t1 to t3 is the first window, and a time period from t4 to t5 is the second window.

S302. After receiving the first paging message in the first window, a second NAN device determines, according to the first paging message, whether the second NAN device meets the first service information.

It should be noted that the second NAN device is a NAN device that receives the first paging message in the group.

S303. The second NAN device sends a paging response message to the first NAN device when the second NAN device determines that the second NAN device meets the first service information.

Specifically, the second NAN device may send the paging response message to the first NAN device in the first window, or may send the paging response message to the first NAN device in the second window. No limitation is imposed in this embodiment of the present invention.

Further, the paging response message carries identifier information of the second NAN device, and the identifier information of the second NAN device is used to indicate a destination address used when the first NAN device sends data to the second NAN device.

S304. After receiving the paging response message, the first NAN device determines, according to the paging response message, whether to perform data transmission with the second NAN device.

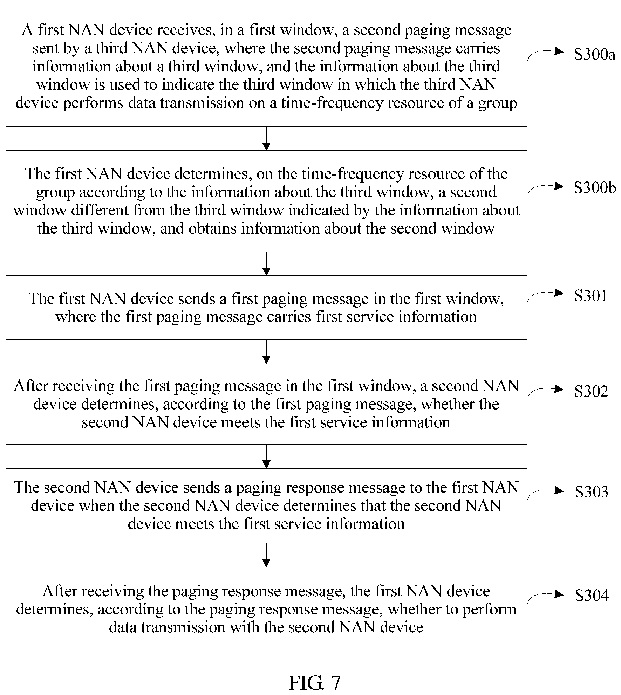

Further, with reference to FIG. 5, as shown in FIG. 7, before S301, the method may further include the following steps:
S300a. The first NAN device receives, in the first window, a second paging message sent by a third NAN device, where the second paging message carries information about a third window, and the information about the third window is used to indicate the third window in which the third NAN device performs data transmission on a time-frequency resource of a group.

In this example, before the first NAN device sends the first paging message, the first NAN device may further receive a paging message sent by a NAN device different from the first NAN device in the group. For example, the first NAN device receives, in the first window, the second paging message sent by the third NAN device, and the second paging message carries service information of the third NAN device and the information about the third window. In this case, a NAN device that receives the second paging message in the group needs to determine whether the NAN device meets the service information, and a NAN device that meets the service information in the group may perform data transmission with the third NAN device in the third window.

S300b. The first NAN device determines, on the time-frequency resource of the group according to the information about the third window, a second window different from the third window indicated by the information about the third window, and obtains information about the second window.

In this example of the present invention, the third NAN device has specified the third window for data transmission. Therefore, to avoid resource contention when the first NAN device performs data transmission with the third NAN device, the first NAN device may stagger a time period in which the first NAN device performs data transmission with the third NAN device. That is, the first NAN device may determine, on the time-frequency resource of the group according to the information about the third window, the second window different from the third window indicated by the information about the third window, and obtain the information about the second window.

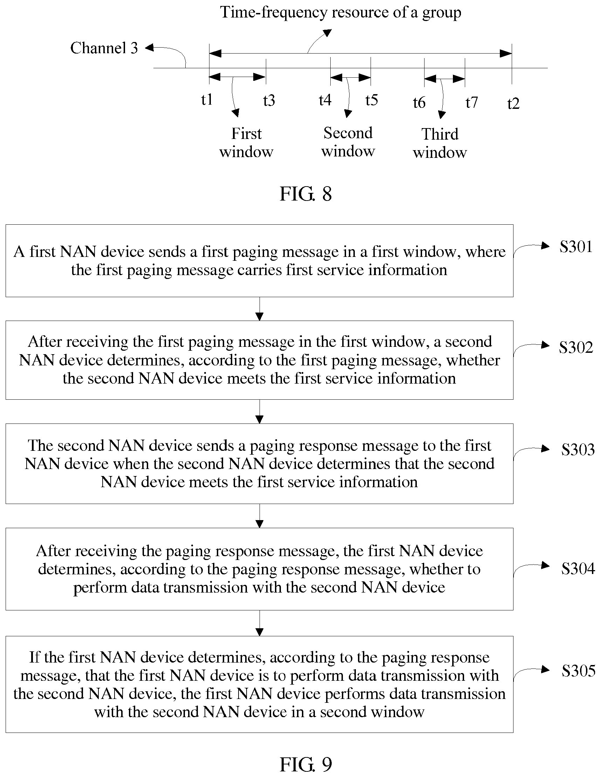

For example, as shown in FIG. 8, FIG. 8 shows a time-frequency resource of the group. That is, the group operates on a channel 3, and a time window ranges from t1 to t2. A time period from t1 to t3 is the first window, a time period from t4 to t5 is the second window, and a time period from t6 to t7 is the third window.

It should be noted that by using the method for paging between NAN devices provided in this example, NAN devices can properly specify respective windows for data transmission without central scheduling by a central node, that is, each NAN device that needs to perform data transmission in the group can determine, with reference to a window specified by another NAN device for data transmission, a window that is for data transmission and is different from the window specified by the another NAN device, so as to avoid resource contention with the another NAN device in a data transmission process.

Further, in the method for paging between NAN devices provided in this embodiment of the present invention, a NAN device may further be switched to a dormant state in a time period in which the NAN device does not perform data transmission, so as to reduce power consumption of the NAN device.

To better describe an effect, of reducing power consumption of a NAN device, that can be achieved by using the method for paging between NAN devices provided in this example of the present invention, the following is described by using examples in which the first NAN device, the second NAN device, the third NAN device, and a fourth NAN device in the group are switched between the active state and the dormant state.

After sending the first paging message in the first window, the first NAN device receives the paging response message sent by the second NAN device, and the first NAN device determines, according to the paging response message, to perform data transmission with the second NAN device. After sending the second paging message in the first window, the third NAN device receives paging response messages separately sent by the first NAN device and the fourth NAN device, and the third NAN device determines, according to the received paging response messages, to perform data transmission with both the first NAN device and the fourth NAN device.

With reference to the time-frequency resource of the group that is shown in FIG. 8, in this example, because the first NAN device needs to perform data transmission in the second window and the third window, the first NAN device may be switched to the active state in the second window and the third window. Because the first NAN device does not need to perform data transmission in three time periods: a time period from t3 to t4, a time period from t5 to t6, and a time period from t7 to t2, the first NAN device may be switched to the dormant state in the three time periods, so as to reduce power consumption of the first NAN device.

Because the second NAN device needs to perform data transmission in the second window, the second NAN device may be switched to the active state in the second window. Because the second NAN device does not need to perform data transmission in two time periods: the time period from t3 to t4 and a time period from t5 to t2, the second NAN device may be switched to the dormant state in the two time periods, so as to reduce power consumption of the second NAN device.

Because the third NAN device and the fourth NAN device need to perform data transmission in the third window, the third NAN device and the fourth NAN device may be switched to the active state in the third window. Because the third NAN device and the fourth NAN device do not need to perform data transmission in two time periods: a time period from t3 to t6 and the time period from t7 to t2, the third NAN device and the fourth NAN device may be switched to the dormant state in the two time periods, so as to reduce power consumption of the third NAN device and the fourth NAN device.

By using the method for paging between NAN devices provided in this example of the present invention, a NAN device in the group can be switched to the active state in a time period in which the NAN device needs to perform data transmission, and can be switched to the dormant state in a time period in which the NAN device does not need to perform data transmission, so as to reduce power consumption of the NAN device.

Further, with reference to FIG. 5, as shown in FIG. 9, after S304, the method may further include the following step:
S305. If the first NAN device determines, according to the paging response message, that the first NAN device is to perform data transmission with the second NAN device, the first NAN device performs data transmission with the second NAN device in the second window.

Specifically, when the paging response message is a query message, if the first NAN device determines, according to the query message, that there is buffered data that needs to be sent to the second NAN device, the first NAN device sends the data to the second NAN device in the second window. The data sent by the first NAN device to the second NAN device is data of a service specified in the first service information.

When the paging response message is a transmission indication message, if the first NAN device determines, according to the transmission indication message, to receive data to be sent by the second NAN device, the first NAN device receives, in the second window, data sent by the second NAN device. The data that is sent by the second NAN device and is received by the first NAN device is data of a service specified in the first service information.

Further, when the first NAN device has a relatively high requirement on a security level in a data transmission process, that is, in the process in which the first NAN device performs data transmission, it is required that only the first NAN device and a NAN device that performs data transmission with the first NAN device can parse transmitted data, in this example, the security level of the first NAN device in the data transmission process may be improved in at least the following manners:
Manner 1: When joining the group, the first NAN device may receive a group key sent by the second NAN device. Therefore, when the first NAN device performs data transmission with a NAN device different from the first NAN device in the group, the first NAN device may encrypt to-be-transmitted data by using the group key. The group key is a common key used during data transmission between NAN devices in the group.
Manner 2: The first NAN device may establish paired shared keys with the second NAN device, for example, perform Diffie-Hellman (DH for short) key exchange with the second NAN device, so as to establish a shared key between the first NAN device and the second NAN device. Therefore, when performing data transmission with the second NAN device, the first NAN device may encrypt to-be-transmitted data by using the shared key.
Manner 3: Before the first NAN device performs data transmission with the second NAN device, the first NAN device initiates security authentication between the first NAN device and the second NAN device. The first NAN device may perform data transmission when the security authentication succeeds. If the security authentication fails, the first NAN device is disallowed to perform data transmission with the second NAN device.
Manner 4: After security authentication between the first NAN device and the second NAN device succeeds, the second NAN device sends a group key to the first NAN device. Therefore, when performing data transmission with the second NAN device, the first NAN device encrypts to-be-transmitted data by using the group key.

Optionally, when the first NAN device receives the group key sent by the second NAN device, the first NAN device may not need to perform again security authentication between the first NAN device and a NAN device different from the second NAN device in the group, that is, after obtaining the group key by means of one time of security authentication, the first NAN device may directly perform data transmission with any NAN device different from the first NAN device in the group by using the group key.

It should be noted that in this example, there are multiple manners of performing security authentication between the first NAN device and the second NAN device. The manners include password authentication, 4-way handshake authentication, pre-shared key (PSK) authentication, Wi-Fi protected setup (WPS for short), Device Provision Protocol (DPP for short) authentication, authentication performed based on information that is entered by using an application, and the like. No limitation is imposed in this embodiment of the present invention.

There are also multiple manners in which the first NAN device encrypts the to-be-transmitted data by using a key. For example, the manners may include an Advanced Encryption Standard (AES for short) encryption algorithm, a wired equivalent privacy (WEP for short) algorithm, and the like. No limitation is imposed in this embodiment of the present invention.

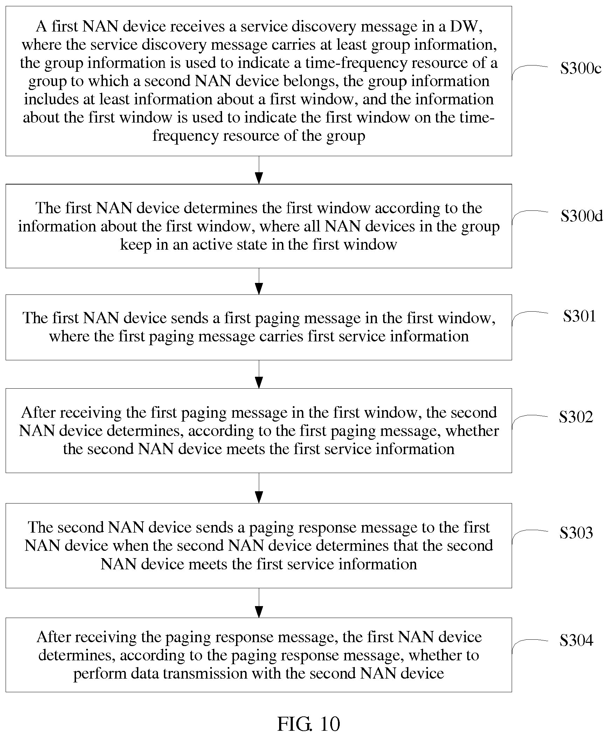

Further, with reference to FIG. 5, as shown in FIG. 10, when the first NAN device joins the group, before S301, the method may further include the following steps:
S300c. The first NAN device receives a service discovery message in a DW, where the service discovery message carries at least group information, the group information is used to indicate a time-frequency resource of a group to which the second NAN device belongs, the group information includes at least information about the first window, and the information about the first window is used to indicate the first window on the time-frequency resource of the group.

S300d. The first NAN device determines the first window according to the information about the first window, where all NAN devices in the group keep in an active state in the first window.

It should be noted that the group information of the group may be information about a group that has established by the second NAN device with another NAN device, or may be information about a group that is not established. Specifically, it is assumed that the group is created by the second NAN device. The second NAN device pre-specifies the group information of the group before the second NAN device creates the group with the another NAN device.

Specifically, the group information may include time window information and frequency resource information of the group. The time window information is used to describe a time resource of the group, and the frequency resource information is used to describe a frequency resource of the group.

The time window information may be a specific moment, for example, may include a start moment and an end moment. Alternatively, the time window information may be an offset value that is based on a time point. For example, based on a start time point or an end time point of the DW, the time information may include an offset value indicating a time point at which the group starts to operate, and an offset value indicating a time point at which the group ends operating. Alternatively, the time window information may be one or more time period numbers. For example, the time window information includes a time period number, and a corresponding time period may be mapped by using the time period number. It should be noted that the time window information may include only information used to describe a time point at which the group starts to operate. A NAN device in the group may determine, according to a specific data transmission status, a time point at which the group ends operating. No limitation is specifically imposed in the present invention.

The frequency resource information may be a specific frequency value, or may be a channel number. The channel number is used to indicate a channel on which the group operates.

In this example, the time window includes at least one first window that is used for maintenance of the group. For example, in the first window, a new NAN device may join the group, or paging may be performed between NAN devices in the group.

The information about the first window may be an end moment of the first window, that is, the first NAN device may determine that a time period from a start moment of the time-frequency resource of the group to the end moment is the first window. Alternatively, the information about the first window may be duration, that is, the first NAN device may determine that a time period that starts from a start moment of the time-frequency resource of the group and is represented by the duration is the first window. Alternatively, the information about the first window may be other information that may be used to describe the first window. No limitation is imposed in this example of the present invention.

Further, the service discovery message received by the first NAN device may be sent by any NAN device in the group in the DW, that is, may be sent by the second NAN device, or may be sent by a NAN device different from the second NAN device in the group.

Alternatively, the service discovery message may be sent by a proxy device by serving as proxy for a NAN device in the group. The proxy device is a device different from a NAN device in the group to which the second NAN device belongs.

It should be noted that a NAN device in the group is used as a group owner of the group. The NAN device registers the group information with the proxy device on behalf of the group; or the NAN device collects service information met by each NAN device in the group, and registers the collected service information and the group information with the proxy device on behalf of the group.

Further, the service discovery message may further carry second service information. The second service information is service information met by a NAN device that sends the service discovery message, or service information that is sent by the proxy device by serving as proxy for a NAN device and that is met by the NAN device. That is, the second service information may be service information met by the second NAN device, or may be service information met by a NAN device different from the second NAN device in the group to which the second NAN device belongs.

When the service discovery message carries the second service information, a user may instruct, according to the second service information, the first NAN device to implement a service related to a service indicated by the second service information. For example, the service indicated by the second service information is "providing piano music for sharing", and the service that the user instructs the first NAN device to implement may be "searching for piano music for sharing". In this case, the first NAN device adds, to the first paging message, the first service information that the second service information can match, and sends the first paging message.

Specifically, the first service information may be service information that the second service information can exactly match. For example, if the second service information is "providing piano music for sharing", the first service information may be "searching for piano music for sharing".

Alternatively, the first service information may be service information that the second service information can roughly match. For example, if the second service information is "providing piano music for sharing", the first service information may be "searching for Lang Lang's piano music for sharing".

It should be noted that even though the service discovery message received by the first NAN device carries the second service information, the user may instruct the first NAN device to implement a service unrelated to the service indicated by the second service information. For example, the service indicated by the second service information is "providing piano music for sharing", but the service that the user instructs the first NAN device to implement may be "searching for a printer". In this case, the first NAN device adds, to the first paging message, the first service information that the second service information cannot match, and sends the first paging message.

It may be understood that whether the first service information is service information that the second service information can match or is service information that the second service information cannot match, the first service information is information used to describe the service that the user instructs the first NAN device to implement.

Optionally, to further facilitate data transmission performed by the first NAN device with a NAN device different from the first NAN device in the group, if the second NAN device is a NAN device that first performs data transmission with the first NAN device after the first NAN device joins the group, the second NAN device may allocate first identifier information to the first NAN device, and send the first identifier information to the first NAN device. The first identifier information is used to indicate a destination address used when a NAN device different from the first NAN device in the group sends data to the first NAN device.

Further, it should be noted that in this embodiment of the present invention, the first window is set on the time-frequency resource of the group to which the second NAN device belongs, and all the NAN devices keep in the active state in the first window. Therefore, when the first NAN device joins the group, the first NAN device may further send, in the first window by means of broadcast or multicast, an indication message that carries the first service information. In the first window, any NAN device different from the first NAN device in the group may receive the indication message, and determine whether the NAN device meets the first service information. Therefore, a NAN device that meets the first service information in the group may send an association trigger message to the first NAN device, to instruct the first NAN device to initiate an association operation between the first NAN device and the NAN device. If the association between the first NAN device and the NAN device succeeds, the first NAN device determines that the first NAN device may establish a data connection to the NAN device.

Optionally, a NAN device that meets the first service information in the group may send an authentication trigger message to the first NAN device, to instruct the first NAN device to initiate security authentication between the first NAN device and the NAN device. If the security authentication between the first NAN device and the NAN device succeeds, the first NAN device determines that the first NAN device may establish a data connection to the NAN device.

The method for paging between NAN devices provided in this example may include the following steps: The first NAN device sends the first paging message in the first window, receives the paging response message sent by the second NAN device that meets the first service information, and determines, according to the paging response message, whether the first NAN device is to perform data transmission with the second NAN device. The first paging message carries the first service information of the first NAN device. The paging response message is used to indicate that data transmission needs to be performed between the first NAN device and the second NAN device. The first service information is used to describe the service that needs to be performed by the first NAN device. By using the method, the first NAN device may send, to a NAN device in the group in the specified first window, a paging message that carries service information, so that after determining that the second NAN device meets the service information, the second NAN device receiving the paging message feeds the paging response message back to the first NAN device. That is, paging can be performed between NAN devices by using service information. Therefore, paging between NAN devices neither needs to depend on assistance of the central node, nor needs the central node to allocate an AID to each NAN device, so that efficiency of paging between NAN devices is improved.

### Example 3

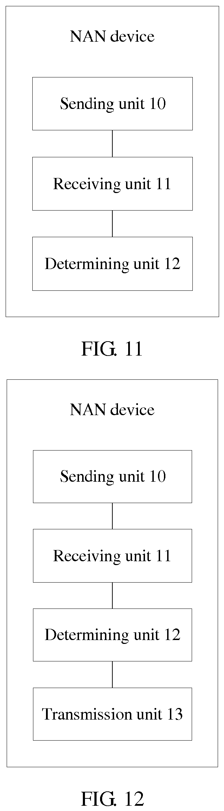

As shown in FIG. 11, an example provides a NAN device. The NAN device can implement the method procedure that can be performed by the first NAN device in the embodiment shown in FIG. 2, FIG. 5, FIG. 7, FIG. 9, or FIG. 10, and can also implement the method procedure that can be performed by the second NAN device in the embodiment shown in FIG. 3, FIG. 5, FIG. 7, FIG. 9, or FIG. 10. The NAN device may include:
a sending unit 10, configured to send a first paging message in a first window, where the first paging message carries first service information of the NAN device, and the first service information is used to describe a service that needs to be performed by the NAN device;
a receiving unit 11, configured to receive a first paging response message sent by a first NAN device that meets the first service information, where the first paging response message is used to indicate that data transmission needs to be performed between the first NAN device and the NAN device to which the receiving unit 11 belongs; and
a determining unit 12, configured to determine, according to the first paging response message received by the receiving unit 11, whether the NAN device is to perform data transmission with the first NAN device.

Optionally, the receiving unit 11 is further configured to: before the sending unit 10 sends the first paging message in the first window, receive a service discovery message in a DW. The service discovery message carries at least group information. The group information is used to indicate a time-frequency resource of a group to which the first NAN device belongs. The group information includes at least information about the first window. The information about the first window is used to indicate the first window on the time-frequency resource of the group.

The determining unit 12 is further configured to determine the first window according to the information about the first window. All NAN devices in the group keep in an active state in the first window.

Optionally, the service discovery message received by the receiving unit 11 further carries second service information, and the second service information is service information met by a device that sends the service discovery message in the group.

The first service information is service information that the second service information matches.

Optionally, the first paging message sent by the sending unit 10 further includes information about a second window, and the information about the second window is used to indicate the second window in which the NAN device performs data transmission on the time-frequency resource of the group.

Optionally, the receiving unit 11 is further configured to: before the sending unit 10 sends the first paging message in the first window, receive, in the first window, a second paging message sent by a second NAN device. The second paging message carries information about a third window. The information about the third window is used to indicate the third window in which the third NAN device performs data transmission on the time-frequency resource of the group.

The determining unit 12 is further configured to: determine, on the time-frequency resource of the group according to the information about the third window, the second window different from the third window, and obtain the information about the second window.

Optionally, with reference to FIG. 11, as shown in FIG. 12, the NAN device further includes a transmission unit 13.

The transmission unit 13 is configured to: when the determining unit 12 determines, according to the first paging response message, that the NAN device is to perform data transmission with the first NAN device, perform data transmission with the first NAN device in the second window.

The first paging response message received by the receiving unit 11 is a query message, and the query message is used to query whether the NAN device needs to send data to the first NAN device.

The determining, according to the first paging response message received by the receiving unit 11, whether the NAN device is to perform data transmission with the first NAN device includes:
determining, according to the query message, whether the NAN device is to send data to the first NAN device.

The first paging response message received by the receiving unit 11 is a transmission indication message, and the transmission indication message is used to indicate that the NAN device needs to send data to the first NAN device.

The determining, according to the first paging response message received by the receiving unit 11, whether the NAN device is to perform data transmission with the first NAN device includes:
determining, according to the transmission indication message, whether the NAN device is to receive data to be sent by the first NAN device.

Optionally, the first paging response message received by the receiving unit 11 carries identifier information of the first NAN device, and the identifier information of the first NAN device is used to indicate a destination address used when the NAN device sends data to the first NAN device.

Optionally, the NAN device belongs to the group. The receiving unit 11 is further configured to receive first identifier information sent by the first NAN device. The first identifier information is allocated by the first NAN device to the NAN device. The first identifier information is used to indicate a destination address used when a NAN device different from the NAN device in the group sends data to the NAN device.

Optionally, the NAN device belongs to the group. The receiving unit 11 is further configured to receive a group key sent by the first NAN device. The group key is used by the NAN device to encrypt data to be transmitted between the NAN device and a NAN device different from the NAN device in the group.

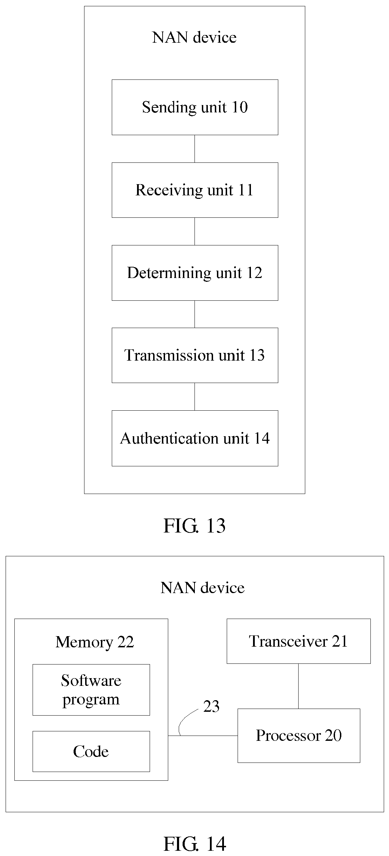

Optionally, with reference to FIG. 12, as shown in FIG. 13, the NAN device further includes an authentication unit 14.

The authentication unit 14 is configured to initiate security authentication between the NAN device and the first NAN device before the transmission unit 13 performs data transmission with the first NAN device in the second window.

If the authentication unit 14 determines that the security authentication between the NAN device and the first NAN device succeeds, the transmission unit 13 is allowed to perform data transmission with the first NAN device in the second window.

Optionally, the second paging message received by the receiving unit 11 further includes third service information, and the third service information is used to describe a service that needs to be performed by the second NAN device.

The determining unit 12 is further configured to determine, according to the second paging message, whether the NAN device meets the third service information.

The sending unit 10 is further configured to send a second paging response message to the second NAN device when the determining unit 12 determines that the NAN device meets the third service information. The second paging response message is used to indicate that data transmission needs to be performed between the second NAN device and the NAN device.

Optionally, the sending a second paging response message to the second NAN device includes:
sending the second paging response message to the second NAN device in the first window; or sending the second paging response message to the second NAN device in the third window.

It should be noted that in this embodiment of the present invention, the sending unit 10, the receiving unit 11, and the transmission unit 13 may be a transceiver of the NAN device. The determining unit 12 and the authentication unit 14 may be an independently disposed processor of the NAN device; or may be integrated into a processor of the NAN device for implementation; or may be stored in a memory of the NAN device in a form of program code. A processor of the NAN device invokes and executes the functions of the determining unit 12 and the authentication unit 14. The processor herein may be a central processing unit (CPU for short) or an application-specific integrated circuit (ASIC short), or may be one or more integrated circuits configured to implement this embodiment of the present invention.

Further, in this example of the present invention, the NAN device may be a communications device that has a NAN function. For example, the NAN device may be the following device that has the NAN function, for example, a mobile station, a personal computer, a laptop computer, a tablet computer, or a netbook; or may be the following device that has the NAN function, for example, a mobile phone, a smartwatch, smart glasses, or a wireless modem.

The NAN device provided in this example of the present invention can send the first paging message in the first window, receive the paging response message sent by the first NAN device that meets the first service information, and determine, according to the paging response message, whether the NAN device is to perform data transmission with the first NAN device. The first paging message carries the first service information of the NAN device. The first service information is used to describe the service that needs to be performed by the NAN device. The NAN device provided in this embodiment of the present invention may send, to another NAN device in the group in the specified first window, a paging message that carries service information, so that after determining that the first NAN device meets the service information, the first NAN device receiving the paging message feeds the paging response message back to the NAN device. That is, paging can be performed between NAN devices by using service information. Therefore, paging between NAN devices neither needs to depend on assistance of a central node, nor needs the central node to allocate an AID to each NAN device, so that efficiency of paging between NAN devices is improved.

### Example 4

As shown in FIG. 14, an example provides a NAN device. The NAN device may include a processor 20, a transceiver 21, a memory 22, and a bus system 23. The processor 20, the transceiver 21, and the memory 22 are connected and implement mutual communication by using the bus system 23.

The processor 20 may be a CPU or an ASIC, or may be one or more integrated circuits configured to implement this embodiment of the present invention.

The transceiver 21 may be a module that has a transceiver function and integrates a transmitter and a receiver, or may be a module that has an independent transmitter and an independent receiver. The transceiver 21 is configured to communicate with another device by the NAN device. For example, the transceiver 21 is controlled by the processor 20 to communicate with another NAN device.

The memory 22 may include a volatile memory, such as a random-access memory (RAM for short). Alternatively, the memory 22 may include a non-volatile memory, such as a read-only memory (ROM for short), a flash memory, a hard disk drive (HDD for short), or a solid state disk (SSD for short). Alternatively, the memory 22 may include a combination of the foregoing types of memories.

When the NAN device operates, the processor 20, the transceiver 21, and the memory 22 may perform the method procedure performed by the first NAN device in the embodiment shown in FIG. 2, FIG. 5, FIG. 7, FIG. 9, or FIG. 10, and the following content is specifically included.

The transceiver 21 is configured to: send a first paging message in a first window, and receive a first paging response message sent by a first NAN device that meets first service information. The first paging message carries the first service information of the NAN device. The first service information is used to describe a service that needs to be performed by the NAN device. The first paging response message is used to indicate that data transmission needs to be performed between the first NAN device and the NAN device to which the transceiver 21 belongs. The processor 20 is configured to determine, according to the first paging response message received by the transceiver 21, whether the NAN device is to perform data transmission with the first NAN device.

The memory 22 is configured to store code of the first paging message, code of the first paging response message, code of the first service information, and a software program for controlling the processor 20 to complete the foregoing process, so that the processor 20 executes the software program and invokes the code of the first paging message, the code of the first paging response message, and the code of the first service information, to complete the foregoing process.

Optionally, the transceiver 21 is further configured to: before sending the first paging message in the first window, receive a service discovery message in a DW. The service discovery message carries at least group information. The group information is used to indicate a time-frequency resource of a group to which the first NAN device belongs. The group information includes at least information about the first window. The information about the first window is used to indicate the first window on the time-frequency resource of the group.

The processor 20 is further configured to determine the first window according to the information about the first window. All NAN devices in the group keep in an active state in the first window.

Optionally, the service discovery message received by the transceiver 21 further carries second service information, and the second service information is service information met by a device that sends the service discovery message in the group.

The first service information is service information that the second service information matches.

Optionally, the first paging message sent by the transceiver 21 further includes information about a second window, and the information about the second window is used to indicate the second window in which the NAN device performs data transmission on the time-frequency resource of the group.

Optionally, the transceiver 21 is further configured to: before sending the first paging message in the first window, receive, in the first window, a second paging message sent by a second NAN device. The second paging message carries information about a third window. The information about the third window is used to indicate the third window in which the third NAN device performs data transmission on the time-frequency resource of the group.

The processor 20 is further configured to: determine, on the time-frequency resource of the group according to the information about the third window, the second window different from the third window, and obtain the information about the second window.

Optionally, the transceiver 21 is further configured to: if the processor 20 determines, according to the first paging response message, that the NAN device is to perform data transmission with the first NAN device, perform data transmission with the first NAN device in the second window.

The first paging response message received by the transceiver 21 is a query message, and the query message is used to query whether the NAN device needs to send data to the first NAN device.

The determining, according to the first paging response message received by the transceiver 21, whether the NAN device is to perform data transmission with the first NAN device includes:
determining, according to the query message, whether the NAN device is to send data to the first NAN device.

The first paging response message received by the transceiver 21 is a transmission indication message, and the transmission indication message is used to indicate that the NAN device needs to send data to the first NAN device.

The determining, according to the first paging response message received by the transceiver 21, whether the NAN device is to perform data transmission with the first NAN device includes:
determining, according to the transmission indication message, whether the NAN device is to receive data to be sent by the first NAN device.

Optionally, the first paging response message received by the transceiver 21 carries identifier information of the first NAN device, and the identifier information of the first NAN device is used to indicate a destination address used when the NAN device sends data to the first NAN device.

Optionally, the NAN device belongs to the group. The transceiver 21 is further configured to receive first identifier information sent by the first NAN device. The first identifier information is allocated by the first NAN device to the NAN device. The first identifier information is used to indicate a destination address used when a NAN device different from the NAN device in the group sends data to the NAN device.

Optionally, the NAN device belongs to the group. The transceiver 21 is further configured to receive a group key sent by the first NAN device. The group key is used by the NAN device to encrypt data to be transmitted between the NAN device and a NAN device different from the NAN device in the group.

Optionally, the processor 20 is further configured to initiate security authentication between the NAN device and the first NAN device before the transceiver 21 performs data transmission with the first NAN device in the second window.

If the processor 20 determines that the security authentication between the NAN device and the first NAN device succeeds, the transceiver 21 is allowed to perform data transmission with the first NAN device in the second window.

Optionally, when the NAN device operates, the processor 20, the transceiver 21, and the memory 22 may also perform the method procedure performed by the second NAN device in the embodiment shown in FIG. 3, FIG. 5, FIG. 7, FIG. 9, or FIG. 10, and the following content is specifically included.

The second paging message received by the transceiver 21 further includes third service information, and the third service information is used to describe a service that needs to be performed by the second NAN device.

The processor 20 is further configured to determine, according to the second paging message, whether the NAN device meets the third service information.

The transceiver 21 is further configured to send a second paging response message to the second NAN device when the processor 20 determines that the NAN device meets the third service information. The second paging response message is used to indicate that data transmission needs to be performed between the second NAN device and the NAN device.

Optionally, the sending a second paging response message to the second NAN device includes: sending the second paging response message to the second NAN device in the first window; or the transceiver 21 is specifically configured to send the second paging response message to the second NAN device in the third window.

The NAN device provided in this embodiment of the present invention can send the first paging message in the first window, receive the paging response message sent by the first NAN device that meets the first service information, and determine, according to the paging response message, whether the NAN device is to perform data transmission with the first NAN device. The first paging message carries the first service information of the NAN device. The first service information is used to describe the service that needs to be performed by the NAN device. The NAN device provided in this embodiment of the present invention may send, to another NAN device in the group in the specified first window, a paging message that carries service information, so that after determining that the first NAN device meets the service information, the first NAN device receiving the paging message feeds the paging response message back to the NAN device. That is, paging can be performed between NAN devices by using service information. Therefore, paging between NAN devices neither needs to depend on assistance of a central node, nor needs the central node to allocate an AID to each NAN device, so that efficiency of paging between NAN devices is improved.

### Example 5

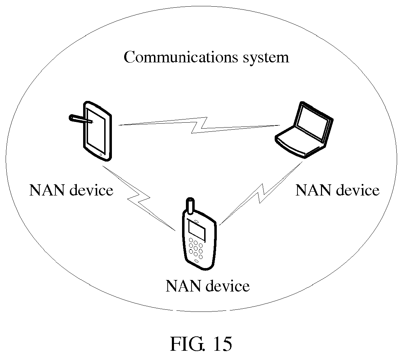

As shown in FIG. 15, an example provides a communications system. The communications system includes at least two NAN devices as described in Embodiment 3. Alternatively, the communications system includes at least two NAN devices as described in Embodiment 4.

In the NAN device provided in example

It may be understood that the NAN device in the communications system provided in this embodiment of the present invention can perform the method for paging between NAN devices that can be performed by the first NAN device in the embodiment shown in any one of FIG. 2, FIG. 5, FIG. 7, FIG. 9, or FIG. 10. For specific functions of modules or components in the NAN device and a method execution procedure, refer to description in the embodiment shown in any one of FIG. 2, FIG. 5, FIG. 7, FIG. 9, or FIG. 10. Details are not described herein.

The NAN device in the communications system provided in this embodiment of the present invention can also perform the method for paging between NAN devices that can be performed by the second NAN device in the embodiment shown in any one of FIG. 3, FIG. 5, FIG. 7, FIG. 9, or FIG. 10. For specific functions of modules or components in the NAN device and a method execution procedure, refer to description in the embodiment shown in any one of FIG. 3, FIG. 5, FIG. 7, FIG. 9, or FIG. 10. Details are not described herein.

According to the communications system provided in this example, a NAN device in the communications system may send, to another NAN device in a group in a specified first window, a paging message that carries service information, so that after determining that the another NAN device meets the service information, the another NAN device receiving the paging message feeds a paging response message back to the NAN device. That is, paging can be performed between NAN devices by using service information. Therefore, paging between NAN devices neither needs to depend on assistance of a central node, nor needs the central node to allocate an AID to each NAN device, so that efficiency of paging between NAN devices is improved.

It may be clearly understood by a person skilled in the art that, for a purpose of convenient and brief description, division of the foregoing function modules is used as an example for illustration. In actual application, the foregoing functions can be allocated to different function modules for implementation according to a requirement, that is, an inner structure of an apparatus is divided into different function modules to implement all or some of the foregoing functions. For a detailed working process of the foregoing system, apparatus, and unit, refer to a corresponding process in the foregoing method embodiments. Details are not described herein.

In the several embodiments provided in this application, it should be understood that the disclosed system, apparatus, and method may be performed in other manners. For example, the described apparatus embodiments are only examples. For example, the module or unit division is only logical function division and may be other division in actual implementation. For example, multiple units or components may be combined or integrated into another system, or some features may be ignored or not performed. In addition, the displayed or discussed mutual couplings or direct couplings or communication connections may be performed by using some interfaces. The indirect couplings or communication connections between the apparatuses or units may be performed in electronic, mechanical, or other forms.

The units described as separate parts may or may not be physically separate, and parts displayed as units may or may not be physical units, that is may be located in one position, or may be distributed on multiple network units. Some or all of the units may be selected according to an actual requirement to achieve the objective of the solutions in the embodiments.

In addition, function units in the embodiments of the present invention may be integrated into one processing unit, or each of the units may exist alone physically, or two or more units may be integrated into one unit. The integrated unit may be performed in a form of hardware, or may be performed in a form of a software function unit.

When the integrated unit is performed in the form of a software function unit and sold or used as an independent product, the integrated unit may be stored in a computer-readable storage medium. Based on such an understanding, the technical solutions in the present invention essentially, or the part contributing to the prior art, or all or some of the technical solutions may be performed in a form of a software product. The computer software product is stored in a storage medium and includes several instructions for instructing a computer device (which may be a personal computer, a server, a network device, or the like) or a processor to perform all or some of the steps of the methods in the embodiments of the present invention. The foregoing storage medium includes any medium that can store program code, such as a USB flash drive, a removable hard disk, a read-only memory (ROM for short), a random access memory (RAM for short), a magnetic disk, or an optical disc.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for paging between neighbor awareness networking, NAN, devices, comprising:
sending (S101), by a first NAN device, a first paging message in a first window, wherein the first paging message carries first service information of the first NAN device, and the first service information is used to describe a service that needs to be performed by the first NAN device;
receiving (S102), by the first NAN device, a paging response message sent by a second NAN device that meets the first service information, wherein the paging response message is used to indicate that data transmission needs to be performed between the first NAN device and the second NAN device; and
determining (SI03), by the first NAN device according to the paging response message, whether the first NAN device is to perform data transmission with the second NAN device;
wherein the paging response message is a query message, and the query message is used to query whether the first NAN device needs to send data to the second NAN device; and the determining, by the first NAN device according to the paging response message, whether the first NAN device is to perform data transmission with the second NAN device comprises: determining, by the first NAN device according to the query message, whether the first NAN device is to send data to the second NAN device; wherein, after receiving the query message sent by the second NAN device, the first NAN device determines, according to the query message, whether the first NAN device buffers data to be sent to the second NAN device, and if the first NAN device buffers data to be sent to the second NAN device, the first NAN device determines to send the buffered data to the second NAN device and if the first NAN device buffers no data to be sent to the second NAN device, the first NAN device determines not to send the buffered data to the second NAN device; or
wherein the paging response message is a transmission indication message, and the transmission indication message is used to indicate that the second NAN device needs to send data to the first NAN device; and the determining, by the first NAN device according to the paging response message, whether the first NAN device is to perform data transmission with the second NAN device comprises: determining, by the first NAN device according to the transmission indication message, whether the first NAN device is to receive data to be sent by the second NAN device; wherein, after receiving the transmission indication message sent by the second NAN device, the first NAN device determines, according to the transmission indication message, whether to receive the data that is to be sent by the second NAN device.

2. The method according to claim 1, wherein before the sending, by a first NAN device, a first paging message in a first window, the method further comprises:
receiving, by the first NAN device, a service discovery message in a discovery window DW, wherein the service discovery message carries at least group information, the group information is used to indicate a time-frequency resource of a group to which the second NAN device belongs, the group information comprises at least information about the first window, and the information about the first window is used to indicate the first window on the time-frequency resource of the group; and
determining, by the first NAN device, the first window according to the information about the first window, wherein all NAN devices in the group keep in an active state in the first window.

3. The method according to claim 2, wherein
the service discovery message further carries second service information, and the second service information is service information met by a device that sends the service discovery message in the group; and
the first service information is service information that the second service information matches.

4. The method according to claim 2 or 3, wherein
the first paging message further comprises information about a second window, and the information about the second window is used to indicate the second window in which the first NAN device performs data transmission on the time-frequency resource of the group.

5. The method according to claim 4, wherein before the sending, by a first NAN device, a first paging message in a first window, the method further comprises:
receiving, by the first NAN device in the first window, a second paging message sent by a third NAN device, wherein the second paging message carries information about a third window, and the information about the third window is used to indicate the third window in which the third NAN device performs data transmission on the time-frequency resource of the group; and
determining, by the first NAN device on the time-frequency resource of the group according to the information about the third window, the second window different from the third window, and obtaining the information about the second window.

6. The method according to claim 4 or 5, wherein if the first NAN device determines, according to the paging response message, that the first NAN device is to perform data transmission with the second NAN device, the method further comprises:
performing, by the first NAN device, data transmission with the second NAN device in the second window.

7. A neighbor awareness networking, NAN, device, comprising:
a sending unit (10), configured to send a first paging message in a first window, wherein the first paging message carries first service information of the NAN device, and the first service information is used to describe a service that needs to be performed by the NAN device;
a receiving unit (11), configured to receive a first paging response message sent by a first NAN device that meets the first service information, wherein the first paging response message is used to indicate that data transmission needs to be performed between the first NAN device and the NAN device to which the receiving unit belongs; and
a determining unit (12), configured to determine, according to the first paging response message received by the receiving unit, whether the NAN device is to perform data transmission with the first NAN device;
wherein the first paging response message received by the receiving unit is a query message, and the query message is used to query whether the NAN device needs to send data to the first NAN device; and the determining, according to the first paging response message received by the receiving unit, whether the NAN device is to perform data transmission with the first NAN device comprises: determining, according to the query message, whether the NAN device is to send data to the first NAN device; wherein, after receiving the query message sent by the second NAN device, the first NAN device determines, according to the query message, whether the first NAN device buffers data to be sent to the second NAN device, and if the first NAN device buffers data to be sent to the second NAN device, the first NAN device determines to send the buffered data to the second NAN device and if the first NAN device buffers no data to be sent to the second NAN device, the first NAN device determines not to send the buffered data to the second NAN device; or
wherein the first paging response message received by the receiving unit is a transmission indication message, and the transmission indication message is used to indicate that the NAN device needs to send data to the first NAN device; and the determining, according to the first paging response message received by the receiving unit, whether the NAN device is to perform data transmission with the first NAN device comprises: determining, according to the transmission indication message, whether the NAN device is to receive data to be sent by the first NAN device; wherein, after receiving the transmission indication message sent by the second NAN device, the first NAN device determines, according to the transmission indication message, whether to receive the data that is to be sent by the second NAN device.

8. The NAN device according to claim 7, wherein
the receiving unit is further configured to: before the sending unit sends the first paging message in the first window, receive a service discovery message in a discovery window DW, wherein the service discovery message carries at least group information, the group information is used to indicate a time-frequency resource of a group to which the first NAN device belongs, the group information comprises at least information about the first window, and the information about the first window is used to indicate the first window on the time-frequency resource of the group; and
the determining unit is further configured to determine the first window according to the information about the first window, wherein all NAN devices in the group keep in an active state in the first window.

9. The NAN device according to claim 8, wherein
the service discovery message received by the receiving unit further carries second service information, and the second service information is service information met by a device that sends the service discovery message in the group; and
the first service information is service information that the second service information matches.

10. The NAN device according to claim 8 or 9, wherein
the first paging message sent by the sending unit further comprises information about a second window, and the information about the second window is used to indicate the second window in which the NAN device performs data transmission on the time-frequency resource of the group.

11. The NAN device according to claim 10, wherein
the receiving unit is further configured to: before the sending unit sends the first paging message in the first window, receive, in the first window, a second paging message sent by a second NAN device, wherein the second paging message carries information about a third window, and the information about the third window is used to indicate the third window in which the third NAN device performs data transmission on the time-frequency resource of the group; and
the determining unit is further configured to: determine, on the time-frequency resource of the group according to the information about the third window, the second window different from the third window, and obtain the information about the second window.

12. The NAN device according to claim 10 or 11, wherein the NAN device further comprises a transmission unit, and
the transmission unit is configured to: when the determining unit determines, according to the first paging response message, that the NAN device is to perform data transmission with the first NAN device, perform data transmission with the first NAN device in the second window.

## Patentansprüche

1. Verfahren für Funkruf zwischen "Neighbor Awareness Networking" (NAN)-Geräten, das Folgendes umfasst:
Senden (S101), durch ein erstes NAN-Gerät, einer ersten Funkrufnachricht in einem ersten Fenster,
wobei die erste Funkrufnachricht erste Dienstinformationen des ersten NAN-Gerätes trägt, und die ersten Dienstinformationen verwendet werden, um einen Dienst zu beschreiben, der von dem ersten NAN-Gerät durchgeführt werden muss;
Empfangen (S102), durch das erste NAN-Gerät, einer Funkruf-Antwortnachricht, gesendet von einem zweiten NAN-Gerät, die den ersten Dienstinformationen entspricht,
wobei die Funkruf-Antwortnachricht verwendet wird, um anzugeben, dass Datenübertragung zwischen dem ersten NAN-Gerät und dem zweiten NAN-Gerät durchgeführt werden muss; und
Bestimmen (S103), durch das erste NAN-Gerät gemäß der Funkruf-Antwortnachricht, ob das erste NAN-Gerät Datenübertragung mit dem zweiten NAN-Gerät durchzuführen hat;
wobei die Funkruf-Antwortnachricht eine Abfragenachricht ist, und die Abfragenachricht verwendet wird, um abzufragen, ob das erste NAN-Gerät Daten zu dem zweiten NAN-Gerät senden muss;
und das Bestimmen, durch das erste NAN-Gerät gemäß der Funkruf-Antwortnachricht, ob das erste NAN-Gerät Datenübertragung mit dem zweiten NAN-Gerät durchzuführen hat, Folgendes umfasst:
Bestimmen, durch das erste NAN-Gerät gemäß der Abfragenachricht, ob das erste NAN-Gerät Daten zu dem zweiten NAN-Gerät zu senden hat;
wobei, nach dem Empfangen der von dem zweiten NAN-Gerät gesendeten Abfragenachricht, das erste NAN-Gerät bestimmt, gemäß der Abfragenachricht, ob das erste NAN-Gerät zu dem zweiten NAN-Gerät zu sendende Daten puffert, und falls das erste NAN-Gerät zu dem zweiten NAN-Gerät zu sendende Daten puffert, das erste NAN-Gerät bestimmt, die gepufferten Daten zu dem zweiten NAN-Gerät zu senden, und falls das erste NAN-Gerät keine zu dem zweiten NAN-Gerät zu sendende Daten puffert, das erste NAN-Gerät bestimmt, die gepufferten Daten nicht zu dem zweiten NAN-Gerät zu senden; oder
wobei die Funkruf-Antwortnachricht eine Übertragungsanzeigenachricht ist und die Übertragungsanzeigenachricht verwendet wird, um anzugeben, dass das zweite NAN-Gerät Daten zu dem ersten NAN-Gerät senden muss;
und das Bestimmen, durch das erste NAN-Gerät gemäß der Funkruf-Antwortnachricht, ob das erste NAN-Gerät Datenübertragung mit dem zweiten NAN-Gerät durchzuführen hat, Folgendes umfasst:
Bestimmen, durch das erste NAN-Gerät gemäß der Übertragungsanzeigenachricht, ob das erste NAN-Gerät durch das zweite NAN-Gerät zu sendende Daten zu empfangen hat;
wobei, nach dem Empfangen der durch das zweite NAN-Gerät gesendeten Übertragungsanzeigenachricht, das erste NAN-Gerät bestimmt, gemäß der Übertragungsanzeigenachricht, ob die durch das zweite NAN-Gerät zu sendenden Daten zu empfangen sind.

2. Verfahren gemäß Anspruch 1,
wobei vor dem Senden, durch ein erstes NAN-Gerät, einer ersten Funkrufnachricht in einem ersten Fenster, das Verfahren ferner Folgendes umfasst:
Empfangen, durch das erste NAN-Gerät, einer Diensterkennungsnachricht in einem Erkennungsfenster (DW),
wobei die Diensterkennungsnachricht zumindest Gruppeninformationen trägt, wobei die Gruppeninformationen verwendet werden, um eine Zeit-Frequenz-Ressource einer Gruppe, zu der das zweite NAN-Gerät gehört, anzugeben, die Gruppeninformationen zumindest Informationen über das erste Fenster umfassen, und die Informationen über das erste Fenster verwendet werden, um das erste Fenster auf der Zeit-Frequenz-Ressource der Gruppe anzugeben; und
Bestimmen, durch das erste NAN-Gerät, des ersten Fensters gemäß den Informationen über das erste Fenster,
wobei alle NAN-Geräte in der Gruppe in einem Aktivzustand in dem ersten Fenster bleiben.

3. Verfahren gemäß Anspruch 2,
wobei die Diensterkennungsnachricht ferner zweite Dienstinformationen trägt, und die zweiten Dienstinformationen Dienstinformationen sind, die von einem Gerät erfüllt werden, das die Diensterkennungsnachricht in die Gruppe sendet; und die ersten Dienstinformationen Dienstinformationen sind, die den zweiten Dienstinformationen entsprechen.

4. Verfahren gemäß Anspruch 2 oder 3,
wobei die erste Funkrufnachricht ferner Informationen über ein zweites Fenster umfasst, und die Informationen über das zweite Fenster verwendet werden, um das zweite Fenster anzugeben, in dem das erste NAN-Gerät Datenübertragung auf der Zeit-Frequenz-Ressource der Gruppe durchführt.

5. Verfahren gemäß Anspruch 4,
wobei vor dem Senden, durch ein erstes NAN-Gerät, einer ersten Funkrufnachricht in einem ersten Fenster, das Verfahren ferner Folgendes umfasst:
Empfangen, durch das erste NAN-Gerät in dem ersten Fenster, einer von einem dritten NAN-Gerät gesendeten zweiten Funkrufnachricht,
wobei die zweite Funkrufnachricht ferner Informationen über ein drittes Fenster umfasst, und die Informationen über das dritte Fenster verwendet werden, um das dritte Fenster anzugeben, in dem das dritte NAN-Gerät Datenübertragung auf der Zeit-Frequenz-Ressource der Gruppe durchführt; und
Bestimmen, durch das erste NAN-Gerät auf der Zeit-Frequenz-Ressource der Gruppe gemäß den Informationen über das dritte Fenster, des von dem dritten Fenster verschiedenen zweiten Fensters, und Erhalten der Informationen über das zweite Fenster.

6. Verfahren gemäß Anspruch 4 oder 5,
wobei, falls das erste NAN-Gerät bestimmt, gemäß der Funkruf-Antwortnachricht, dass das erste NAN-Gerät Datenübertragung mit dem zweiten NAN-Gerät durchzuführen hat, das Verfahren ferner Folgendes umfasst:
Durchführen, durch das erste NAN-Gerät, von Datenübertragung mit dem zweiten NAN-Gerät in dem zweiten Fenster.

7. "Neighbor Awareness Networking" (NAN)-Gerät, das Folgendes umfasst:
eine Sendeeinheit (10), die dazu ausgelegt ist, eine erste Funkrufnachricht in einem ersten Fenster zu senden,
wobei die erste Funkrufnachricht erste Dienstinformationen des NAN-Gerätes trägt, und die ersten Dienstinformationen verwendet werden, um einen Dienst zu beschreiben, der von dem NAN-Gerät durchgeführt werden muss;
eine Empfangseinheit (11), die dazu ausgelegt ist, eine von einem ersten NAN-Gerät gesendete erste Funkruf-Antwortnachricht zu empfangen, die den ersten Dienstinformationen entspricht,
wobei die erste Funkruf-Antwortnachricht verwendet wird, um anzugeben, dass Datenübertragung zwischen dem ersten NAN-Gerät und dem NAN-Gerät, zu dem die Empfangseinheit gehört, durchgeführt werden muss; und
eine Bestimmungseinheit (12), die dazu ausgelegt ist zu bestimmen, gemäß der von der Empfangseinheit empfangenen ersten Funkruf-Antwortnachricht, ob das NAN-Gerät Datenübertragung mit dem ersten NAN-Gerät durchzuführen hat;
wobei die von der Empfangseinheit empfangene erste Funkruf-Antwortnachricht eine Abfragenachricht ist, und die Abfragenachricht verwendet wird, um abzufragen, ob das NAN-Gerät Daten zu dem ersten NAN-Gerät senden muss;
und das Bestimmen, gemäß der von der Empfangseinheit empfangenen ersten Funkruf-Antwortnachricht, ob das NAN-Gerät Datenübertragung mit dem ersten NAN-Gerät durchzuführen hat, Folgendes umfasst:
Bestimmen, gemäß der Abfragenachricht, ob das NAN-Gerät Daten zu dem ersten NAN-Gerät zu senden hat;
wobei, nach dem Empfangen der von dem zweiten NAN-Gerät gesendeten Abfragenachricht, das erste NAN-Gerät bestimmt, gemäß der Abfragenachricht, ob das erste NAN-Gerät zu dem zweiten NAN-Gerät zu sendende Daten puffert, und falls das erste NAN-Gerät zu dem zweiten NAN-Gerät zu sendende Daten puffert, das erste NAN-Gerät bestimmt, die gepufferten Daten zu dem zweiten NAN-Gerät zu senden, und falls das erste NAN-Gerät keine zu dem zweiten NAN-Gerät zu sendende Daten puffert, das erste NAN-Gerät bestimmt, die gepufferten Daten nicht zu dem zweiten NAN-Gerät zu senden; oder
wobei die von der Empfangseinheit empfangene erste Funkruf-Antwortnachricht eine Übertragungsanzeigenachricht ist, und die Übertragungsanzeigenachricht verwendet wird, um anzugeben, dass das NAN-Gerät Daten zu dem ersten NAN-Gerät senden muss;
und das Bestimmen, gemäß der von der Empfangseinheit empfangenen ersten Funkruf-Antwortnachricht, ob das NAN-Gerät Datenübertragung mit dem ersten NAN-Gerät durchzuführen hat, Folgendes umfasst:
Bestimmen, gemäß der Übertragungsanzeigenachricht, ob das NAN-Gerät durch das erste NAN-Gerät zu sendende Daten zu empfangen hat;
wobei, nach dem Empfangen der durch das zweite NAN-Gerät gesendeten Übertragungsanzeigenachricht, das erste NAN-Gerät bestimmt, gemäß der Übertragungsanzeigenachricht, ob die durch das zweite NAN-Gerät zu sendenden Daten zu empfangen sind.

8. NAN-Gerät gemäß Anspruch 7,
wobei die Empfangseinheit ferner für Folgendes ausgelegt ist:
bevor die Sendeeinheit die erste Funkrufnachricht in dem ersten Fenster sendet, Empfangen einer Diensterkennungsnachricht in einem Erkennungsfenster (DW),
wobei die Diensterkennungsnachricht zumindest Gruppeninformationen trägt, wobei die Gruppeninformationen verwendet werden, um eine Zeit-Frequenz-Ressource einer Gruppe, zu der das erste NAN-Gerät gehört, anzugeben, die Gruppeninformationen zumindest Informationen über das erste Fenster umfassen, und die Informationen über das erste Fenster verwendet werden, um das erste Fenster auf der Zeit-Frequenz-Ressource der Gruppe anzugeben; und
die Bestimmungseinheit ferner dazu ausgelegt ist, das erste Fenster gemäß den Informationen über das erste Fenster zu bestimmen,
wobei alle NAN-Geräte in der Gruppe in einem Aktivzustand in dem ersten Fenster bleiben.

9. NAN-Gerät gemäß Anspruch 8,
wobei die durch die Empfangseinheit empfangene Diensterkennungsnachricht ferner zweite Dienstinformationen trägt, und die zweiten Dienstinformationen Dienstinformationen sind, die von einem Gerät erfüllt werden, das die Diensterkennungsnachricht in die Gruppe sendet; und
die ersten Dienstinformationen Dienstinformationen sind, die den zweiten Dienstinformationen entsprechen.

10. NAN-Gerät gemäß Anspruch 8 oder 9,
wobei die durch die Sendeeinheit gesendete erste Funkrufnachricht ferner Informationen über ein zweites Fenster umfasst, und die Informationen über das zweite Fenster verwendet werden, um das zweite Fenster anzugeben, in dem das NAN-Gerät Datenübertragung auf der Zeit-Frequenz-Ressource der Gruppe durchführt.

11. NAN-Gerät gemäß Anspruch 10,
wobei die Empfangseinheit ferner für Folgendes ausgelegt ist:
bevor die Sendeeinheit die erste Funkrufnachricht in dem ersten Fenster sendet, Empfangen, in dem ersten Fenster, einer durch ein zweites NAN-Gerät gesendeten zweiten Funkrufnachricht,
wobei die zweite Funkrufnachricht ferner Informationen über ein drittes Fenster umfasst, und die Informationen über das dritte Fenster verwendet werden, um das dritte Fenster anzugeben, in dem das dritte NAN-Gerät Datenübertragung auf der Zeit-Frequenz-Ressource der Gruppe durchführt; und
die Bestimmungseinheit ferner für Folgendes ausgelegt ist:
Bestimmen, auf der Zeit-Frequenz-Ressource der Gruppe gemäß den Informationen über das dritte Fenster, des von dem dritten Fenster verschiedenen zweiten Fensters, und Erhalten der Informationen über das zweite Fenster.

12. NAN-Gerät gemäß Anspruch 10 oder 11,
wobei das NAN-Gerät ferner eine Übertragungseinheit aufweist, und die Übertragungseinheit für Folgendes ausgelegt ist:
wenn die Bestimmungseinheit bestimmt, gemäß der ersten Funkruf-Antwortnachricht, dass das NAN-Gerät Datenübertragung mit dem ersten NAN-Gerät durchzuführen hat, Durchführen der Datenübertragung mit dem ersten NAN-Gerät in dem zweiten Fenster.

## Revendications

1. Procédé de radiomessagerie entre des dispositifs de réseautage sensible au voisinage, NAN, comprenant :
l'envoi (S101), par un premier dispositif de NAN, d'un premier message de radiomessagerie dans une première fenêtre, le premier message de radiomessagerie transportant des premières informations de service du premier dispositif de NAN, et les premières informations de service étant utilisées pour décrire un service qui doit être réalisé par le premier dispositif de NAN ;
la réception (S 102), par le premier dispositif de NAN, d'un message de réponse de radiomessagerie envoyé par un deuxième dispositif de NAN qui satisfait aux premières informations de service, le message de réponse de radiomessagerie étant utilisé pour indiquer qu'une transmission de données doit être réalisée entre le premier dispositif de NAN et le deuxième dispositif de NAN ; et
la détermination (S103), par le premier dispositif de NAN en fonction du message de réponse de radiomessagerie, si le premier dispositif de NAN doit réaliser ou non une transmission de données avec le deuxième dispositif de NAN ;
le message de réponse de radiomessagerie étant un message d'interrogation, et le message d'interrogation étant utilisé pour demander si le premier dispositif de NAN doit envoyer ou non des données au deuxième dispositif de NAN ; et la détermination, par le premier dispositif de NAN en fonction du message de réponse de radiomessagerie, si le premier dispositif de NAN doit réaliser ou non une transmission de données avec le deuxième dispositif de NAN comprenant : la détermination, par le premier dispositif de NAN en fonction du message d'interrogation, si le premier dispositif de NAN doit envoyer ou non des données au deuxième dispositif de NAN ; après réception du message d'interrogation envoyé par le deuxième dispositif de NAN, le premier dispositif de NAN déterminant, en fonction du message d'interrogation, si le premier dispositif de NAN met en mémoire tampon ou non des données à envoyer au deuxième dispositif de NAN, et si le premier dispositif de NAN met en mémoire tampon des données à envoyer au deuxième dispositif de NAN, le premier dispositif de NAN déterminant d'envoyer les données mises en mémoire tampon au deuxième dispositif de NAN et si le premier dispositif de NAN ne met en mémoire tampon aucune donnée à envoyer au deuxième dispositif de NAN, le premier dispositif de NAN déterminant de ne pas envoyer les données mises en mémoire tampon au deuxième dispositif de NAN ; ou
le message de réponse de radiomessagerie étant un message d'indication de transmission, et le message d'indication de transmission étant utilisé pour indiquer que le deuxième dispositif de NAN doit envoyer des données au premier dispositif de NAN ; et la détermination, par le premier dispositif de NAN en fonction du message de réponse de radiomessagerie, si le premier dispositif de NAN doit réaliser ou non une transmission de données avec le deuxième dispositif de NAN comprenant : la détermination, par le premier dispositif de NAN en fonction du message d'indication de transmission, si le premier dispositif de NAN doit recevoir ou non des données à envoyer par le deuxième dispositif de NAN ; après réception du message d'indication de transmission envoyé par le deuxième dispositif de NAN, le premier dispositif de NAN déterminant, en fonction du message d'indication de transmission, s'il doit recevoir ou non les données à envoyer par le deuxième dispositif de NAN.

2. Procédé selon la revendication 1, avant l'envoi, par un premier dispositif de NAN, d'un premier message de radiomessagerie dans une première fenêtre, le procédé comprenant en outre :
la réception, par le premier dispositif de NAN, d'un message de découverte de service dans une fenêtre de découverte DW, le message de découverte de service transportant au moins des informations de groupe, les informations de groupe étant utilisées pour indiquer une ressource temps-fréquence d'un groupe auquel le deuxième dispositif de NAN appartient, les informations de groupe comprenant au moins des informations relatives à la première fenêtre, et les informations relatives à la première fenêtre étant utilisées pour indiquer la première fenêtre sur la ressource temps-fréquence du groupe ; et
la détermination, par le premier dispositif de NAN, de la première fenêtre en fonction des informations relatives à la première fenêtre, tous les dispositifs de NAN dans le groupe restant dans un état actif dans la première fenêtre.

3. Procédé selon la revendication 2,
le message de découverte de service transportant en outre des deuxièmes informations de service, et les deuxièmes informations de service étant des informations de service satisfaites par un dispositif qui envoie le message de découverte de service dans le groupe ; et
les premières informations de service étant des informations de service auxquelles les deuxièmes informations de service correspondent.

4. Procédé selon la revendication 2 ou 3,
le premier message de radiomessagerie comprenant en outre des informations relatives à une deuxième fenêtre, et les informations relatives à la deuxième fenêtre étant utilisées pour indiquer la deuxième fenêtre dans laquelle le premier dispositif de NAN réalise une transmission de données sur la ressource temps-fréquence du groupe.

5. Procédé selon la revendication 4, avant l'envoi, par un premier dispositif de NAN, d'un premier message de radiomessagerie dans une première fenêtre, le procédé comprenant en outre :
la réception, par le premier dispositif de NAN dans la première fenêtre, d'un deuxième message de radiomessagerie envoyé par un troisième dispositif de NAN, le deuxième message de radiomessagerie transportant des informations relatives à une troisième fenêtre, et les informations relatives à la troisième fenêtre étant utilisées pour indiquer la troisième fenêtre dans laquelle le troisième dispositif de NAN réalise une transmission de données sur la ressource temps-fréquence du groupe ; et
la détermination, par le premier dispositif de NAN sur la ressource temps-fréquence du groupe en fonction des informations relatives à la troisième fenêtre, de la deuxième fenêtre différente de la troisième fenêtre, et l'obtention des informations relatives à la deuxième fenêtre.

6. Procédé selon la revendication 4 ou 5, si le premier dispositif de NAN détermine, en fonction du message de réponse de radiomessagerie, que le premier dispositif de NAN doit réaliser une transmission de données avec le deuxième dispositif de NAN, le procédé comprenant en outre :
la réalisation, par le premier dispositif de NAN, d'une transmission de données avec le deuxième dispositif de NAN dans la deuxième fenêtre.

7. Dispositif de réseautage sensible au voisinage, NAN, comprenant :
une unité d'envoi (10), configurée pour envoyer un premier message de radiomessagerie dans une première fenêtre, le premier message de radiomessagerie transportant des premières informations de service du dispositif de NAN, et les premières informations de service étant utilisées pour décrire un service qui doit être réalisé par le dispositif de NAN ;
une unité de réception (11), configurée pour recevoir un premier message de réponse de radiomessagerie envoyé par un premier dispositif de NAN qui satisfait aux premières informations de service, le premier message de réponse de radiomessagerie étant utilisé pour indiquer qu'une transmission de données doit être réalisée entre le premier dispositif de NAN et le dispositif de NAN auquel l'unité de réception appartient ; et
une unité de détermination (12), configurée pour déterminer, en fonction du premier message de réponse de radiomessagerie reçu par l'unité de réception, si le dispositif de NAN doit réaliser ou non une transmission de données avec le premier dispositif de NAN;
le premier message de réponse de radiomessagerie reçu par l'unité de réception étant un message d'interrogation, et le message d'interrogation étant utilisé pour demander si le dispositif de NAN doit envoyer ou non des données au premier dispositif de NAN ; et la détermination, en fonction du premier message de réponse de radiomessagerie reçu par l'unité de réception, si le dispositif de NAN doit réaliser ou non une transmission de données avec le premier dispositif de NAN comprenant :
la détermination, en fonction du message d'interrogation, si le dispositif de NAN doit envoyer ou non des données au premier dispositif de NAN; après réception du message d'interrogation envoyé par le deuxième dispositif de NAN, le premier dispositif de NAN déterminant, en fonction du message d'interrogation, si le premier dispositif de NAN met en mémoire tampon ou non des données à envoyer au deuxième dispositif de NAN, et si le premier dispositif de NAN met en mémoire tampon des données à envoyer au deuxième dispositif de NAN, le premier dispositif de NAN déterminant d'envoyer les données mises en mémoire tampon au deuxième dispositif de NAN et si le premier dispositif de NAN ne met en mémoire tampon aucune donnée à envoyer au deuxième dispositif de NAN, le premier dispositif de NAN déterminant de ne pas envoyer les données mises en mémoire tampon au deuxième dispositif de NAN ; ou
le premier message de réponse de radiomessagerie reçu par l'unité de réception étant un message d'indication de transmission, et le message d'indication de transmission étant utilisé pour indiquer que le dispositif de NAN doit envoyer des données au premier dispositif de NAN ; et la détermination, en fonction du premier message de réponse de radiomessagerie reçu par l'unité de réception, si le dispositif de NAN doit réaliser ou non une transmission de données avec le premier dispositif de NAN comprenant : la détermination, en fonction du message d'indication de transmission, si le dispositif de NAN doit recevoir ou non des données à envoyer par le premier dispositif de NAN ; après réception du message d'indication de transmission envoyé par le deuxième dispositif de NAN, le premier dispositif de NAN déterminant, en fonction du message d'indication de transmission, s'il doit recevoir ou non les données à envoyer par le deuxième dispositif de NAN.

8. Dispositif de NAN selon la revendication 7,
l'unité de réception étant en outre configurée pour : avant que l'unité d'envoi n'envoie le premier message de radiomessagerie dans la première fenêtre, recevoir un message de découverte de service dans une fenêtre de découverte DW, le message de découverte de service transportant au moins des informations de groupe, les informations de groupe étant utilisées pour indiquer une ressource temps-fréquence d'un groupe auquel le premier dispositif de NAN appartient, les informations de groupe comprenant au moins des informations relatives à la première fenêtre, et les informations relatives à la première fenêtre étant utilisées pour indiquer la première fenêtre sur la ressource temps-fréquence du groupe ; et
l'unité de détermination étant en outre configurée pour déterminer la première fenêtre en fonction des informations relatives à la première fenêtre, tous les dispositifs de NAN du groupe restant dans un état actif dans la première fenêtre.

9. Dispositif de NAN selon la revendication 8,
le message de découverte de service reçu par l'unité de réception transportant en outre des deuxièmes informations de service, et les deuxièmes informations de service étant des informations de service satisfaites par un dispositif qui envoie le message de découverte de service dans le groupe ; et
les premières informations de service étant des informations de service auxquelles les deuxièmes informations de service correspondent.

10. Dispositif de NAN selon la revendication 8 ou 9,
le premier message de radiomessagerie envoyé par l'unité d'envoi comprenant en outre des informations relatives à une deuxième fenêtre, et les informations relatives à la deuxième fenêtre étant utilisées pour indiquer la deuxième fenêtre dans laquelle le dispositif de NAN réalise une transmission de données sur la ressource temps-fréquence du groupe.

11. Dispositif de NAN selon la revendication 10,
l'unité de réception étant en outre configurée pour : avant que l'unité d'envoi n'envoie le premier message de radiomessagerie dans la première fenêtre, recevoir, dans la première fenêtre, un deuxième message de radiomessagerie envoyé par un deuxième dispositif de NAN, le deuxième message de radiomessagerie transportant des informations relatives à une troisième fenêtre, et les informations relatives à la troisième fenêtre étant utilisées pour indiquer la troisième fenêtre dans laquelle le troisième dispositif de NAN réalise une transmission de données sur la ressource temps-fréquence du groupe ; et
l'unité de détermination étant en outre configurée pour : déterminer, sur la ressource temps-fréquence du groupe en fonction des informations relatives à la troisième fenêtre, la deuxième fenêtre différente de la troisième fenêtre, et obtenir les informations relatives à la deuxième fenêtre.

12. Dispositif de NAN selon la revendication 10 ou 11, le dispositif de NAN comprenant en outre une unité de transmission, et
l'unité de transmission étant configurée pour : lorsque l'unité de détermination détermine, en fonction du premier message de réponse de radiomessagerie, que le dispositif de NAN doit réaliser une transmission de données avec le premier dispositif de NAN, réaliser une transmission de données avec le premier dispositif de NAN dans la deuxième fenêtre.
